# EUROPÄISCHE PATENTSCHRIFT

(11) **EP 1 028 868 B1**
(45) Veröffentlichungstag und Bekanntmachung des Hinweises auf die Patenterteilung: **28.08.2002**
(21) Anmeldenummer: 98965670.7
(22) Anmeldetag: 13.11.1998
(51) Int. Cl.: B60P 7/15, B62D 33/04

(54) **TELESKOP-LADEBALKEN MIT LÄNGENARRETIERUNG**
TELESCOPIC LOAD BEAM WITH LONGITUDINAL LOCKING DEVICE
POUTRE DE CHARGEMENT TELESCOPIQUE DOTEE D'UN DISPOSITIF D'ARRET LONGITUDINAL

(30) Priorität: 14.11.1997 DE 29720154 U
(43) Veröffentlichungstag der Anmeldung: 23.08.2000
(73) Patentinhaber: ANCRA Jungfalk GmbH, D-78234 Engen (DE)
(72) Erfinder: KOLLER, Karl, CH-8260 Stein am Rhein (CH)
(74) Vertreter: Hiebsch, Gerhard F., Dipl.-Ing.
(86) Internationale Anmeldenummer: EP9807261
(87) Internationale Veröffentlichungsnummer: WO99025583

(56) Entgegenhaltungen:
- EP-A- 0 477 032
- DE-U- 1 743 996
- US-A- 4 079 677
- US-A- 5 472 301

## Beschreibung

Die vorliegende Exfindung betrifft einen Teleskop-Ladebalken nach dem Oberbegriff des Anspruches 1.

Derartige Ladebalken werden in Laderäumen von Nutzfahrzeugen verwendet, um etwa Zwischenlagen zum Aufsetzen von Ladegut zu bilden.

Einen Ladebalken zeigt die deutsche Patentanmeldung DE-A-44 12 067 der Patentinhaberin.

Allerdings betrifft eine solche Trägeranordnung im Aufbau eines Nutzfahrzeugs einen festen, geschlossenen Laderaum mit steifen Seitenwänden, die der Trägeranordnung bereits eine gewisse Grundstabilität verleihen. Zu diesem Zweck sind die aus dem Stand der Technik bekannten Ladebalken, die sich üblicherweise quer und mittig durch den Laderaum erstrecken, an seitlichen Halteelementen befestigbar und mit einer Einrichtung vergehen, die eine Längenveränderung bzw. Längenanpassung des Ladebalkens ermöglicht: Bei der herangezogenen DE-A-44 12 067 erfolgt dies beispielsweise durch die teleskopartige Ausbildung des Ladebalkens mittels zweier gegeneinander verschieblicher Elemente gegen die Kraft einer Spannfeder. Sinn der (begrenzten) Längenänderung des Ladebalkens ist es, das Einsetzen bzw. Montieren des Ladebalkens im Laderaum zu vereinfachen.

Insbesondere beim Einsatz mit Planenfahrzeugen ist jedoch eine solche Ausbildung aus Stabilitätsgründen ungenügend: Bedingt durch die fehlende Stabilisierung eines festen Laderaums ist der Trägeraufbau zum Halten der Plane hohen Kräften ausgesetzt, die zu beträchtlichen Auslenkungen dieser Elemente führen. Würde nun ein etwa mittels einer Feder vorgespannter Teleskop-Ladebalken diesen Auslenkungen folgen, könnte gerade bei schwerer Last ein äußerst instabiler Zustand entstehen.

Aus der DE-U-1 743 966 ist ein Teleskop-Ladebalken nach dem Oberbegriff der Ansprüche 1 und 2 bekannt.

Ferner ist aus der US-A-5,472,301 ein Ladungssicherungssystem mit einem Teleskop-Ladebalken bekannt, der ebenfalls ein langgestrecktes Profilelement sowie ein relativ zu diesem verschiebbares Teleskopelement aufweist und beide Elemente in einer Relativpasition Zueinander fixierbar sind. Eine weitere Realisierungsform eines derartigen Teleskop-Ladebalkens ist aus der US-A-4,079,677 bekannt.

Aufgabe der vorliegenden Erfindung ist es daher, einen Ladebalken für Planenfahrzeuge zu schaffen, der -- zum Zweck etwa einer vereinfachten Montage -- nach wie vor teleskopartig längenveränderbar ist, der jedoch insbesondere während eines Fahrbetriebs nicht die Stabilitätsnachteile eines aus dem Stand der Technik bekannten Ladebalkens aufweist, und der in der Handhabung vereinfacht ist.

Die Aufgabe wird durch den Teleskop-Ladebalken mit Längenarretierung nach den Ansprüchen 1 und 2 gelöst; vorteilhafte Weiterbildungen der Erfindung sind in den Unteransprüchen beschrieben.

Vorteilhaft exmöglicht es die auf konstruktiv einfache Art aus Schwenkhebel und Eingriffsstück gebildete Verriegelungsanordnung, schnell und einfach die erfindungsgemäß vorteilhafte Verriegelungswirkung zwischen den längsverschieblichen Teilen des Ladebalkens zu erreichen, wobei es besonders bevorzugt ist, daß lediglich durch ein Auseinanderziehen des Profilelements und des Teleskopelements die Verriegelungsanordnung einrastet, nämlich dadurch, dass ausbildungsgemäß und bevorzugt der Rasthebel durch sein Eigengewicht und mithin selbsttätig in die Verriegelungsstellung fällt.

Eine besonders günstige Ausführungsform besteht in der Realisierung des Profilelements als Kastenprofil, innerhalb dessen dann das weiter bevorzugt mittels mindestens einem U-Profil gebildete Teleskopelement beweglich gelagert ist. Auf diese Weise kann dann ein zur Längshubbegrenzung vorgesehenes, mit einem entsprechend geformten Langloch zusammenwirkendes Bolzenelement zusätzlich die Rolle des Eingriffsstücks übernehmen, auf welches dann der Schwenkhebel zur Arretierung greift.

Weiter bevorzugt ist es, den Schwenkhebel im Inneren eines der weiterbildungsgemäß vorgesehenen U-förmigen Profilstücke des Teleskopelements vorzusehen, wobei in diesem Fall nicht nur ein Schutz vor Verschmutzung erreicht wird, sondern auch die maximalen Auslenkbewegungen des Schwenkhebels begrenzt werden kann.

Weiterbildungsgemäß ist auch vorgesehen, daß der erfindungsgemäße Ladebalken als Tandembalken realisiert ist.

Weitere Vorteile, Merkmale und Einzelheiten der Erfindung ergeben sich aus der nachfolgenden Beschreibung von Ausführungsbeispielen sowie anhand der Zeichnungen; diese zeigen in
- Fig. 1:: eine Perspektivansicht des Laderaumes eines Planenfahrzeugs mit der Anbringung des erfindungsgemäßen Teleskop-Ladebalkens;
- Fig. 2:: eine Seitenansicht eines Endabschnittes des erfindunsgemäßen Teleskop-Ladebalkens gemäß einer ersten Ausführungsform im eingeschobenen, nicht-arretierten Zustand;
- Fig. 3:: eine Schnittansicht durch die Anordnung gemäß Fig. 2 und
- Fig. 4:: eine schematische Ansicht des erfindungsgemäßen Teleskop-Ladebalkens einer zweiten Ausführungsform mit einem Verriegelungselement im Verriegelungszustand.

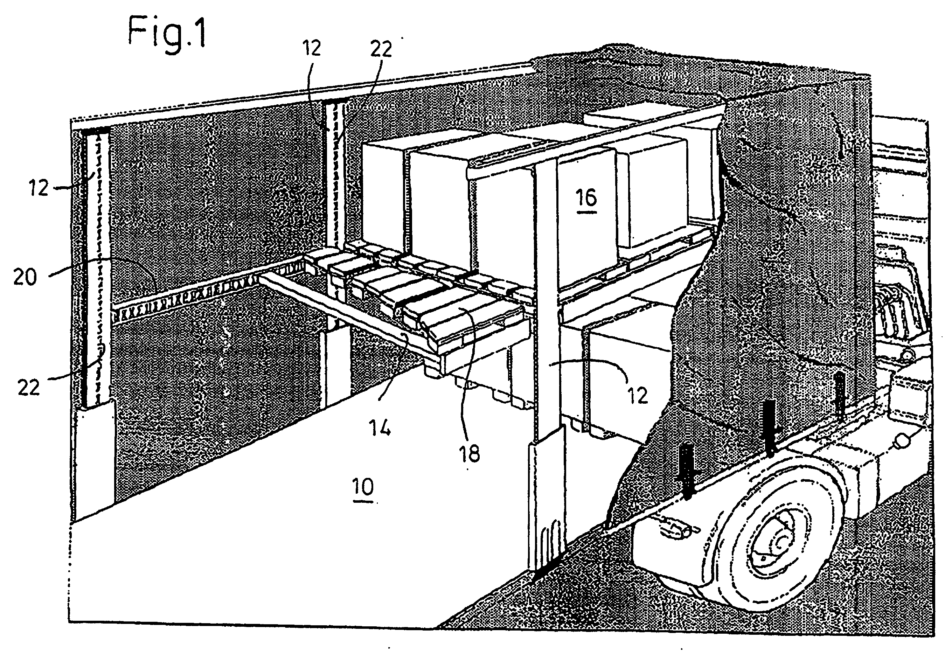

Der erfindungsgemäße Teleskop-Ladebalken ist vorgesehen für Planenaufbauten oberhalb einer Ladefläche 10 eines (schematisch angedeuteten) Nutzfahrzeugs, die mittels einer Mehrzahl sich randseitig vertikal von der Ladefläche 10 erstreckender Rungen 12 realisiert sind. Wie in der Fig. 1 gezeigt, ist ein sich etwa auf halber Höhe der Rungen 12 quer durch den Laderaum erstreckender Ladebalken 14 zum Aufsetzen von Ladegut 16 bzw. unterliegenden Ladegutträgern 18 vorgesehen; auf diese Weise ist in dem Laderaum des Planenfahrzeugs eine Doppelstockverladung möglich.

Der Ladebalken 14 wird beidseitig in einem sich jeweils zwischen zwei Rungen 12 einer Fahrzeugseite erstreckenden Längsbalken 20 gehalten, der zum Einsetzen und Befestigen eines jeweiligen Endes des Ladebalkens 14 eine (schematisch dargestellte) Horizontalschiene zum Aufnehmen eines Eingriffsendes des Ladebalkens 14 aufweist, und der mittels (nicht gezeigter) Führungsschienen bevorzugt höhenverstellbar in den Rungen 12 sitzt. Darüber hinaus weisen die Rungen 12 eine Vertikalschiene 22 auf, die auch unmittelbar ein jeweiliges Eingriffsende eines Ladebalkens aufnehmen kann.

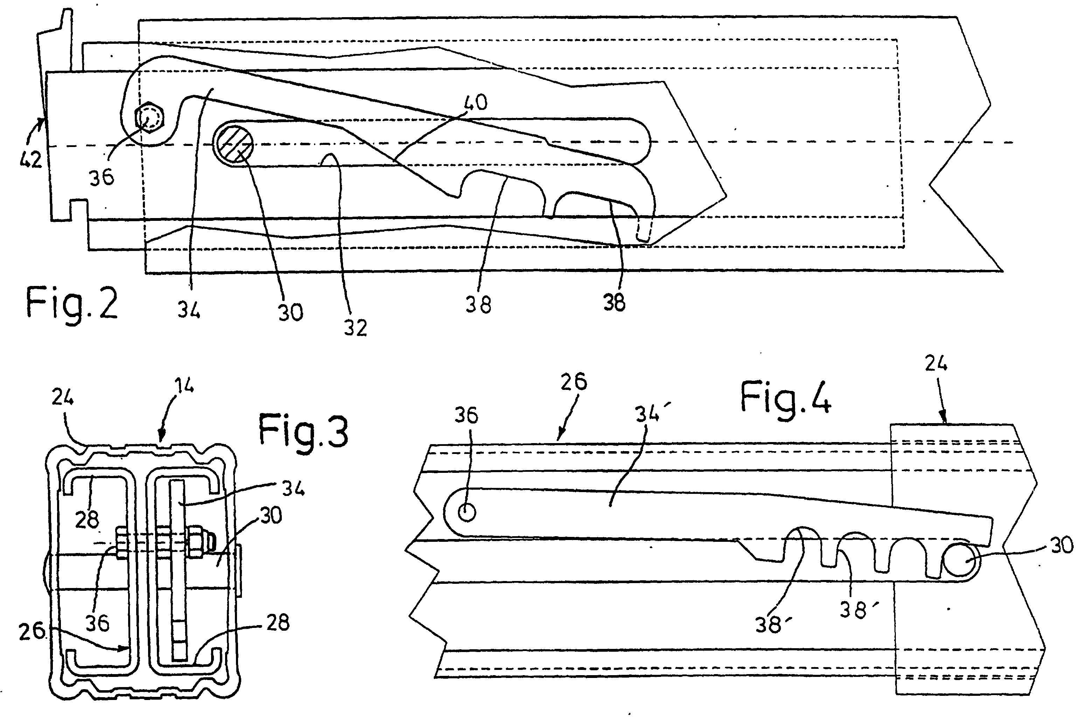

Eine einfache Montage eines Ladebalkens 14 in einem solchen Trägersystem sowie eine zuverlässige, die Stabilität des Gesamtaufbaus deutlich verbessernde Längenfixierung des Ladebalkens wird nachfolgend unter Bezug auf die Detailansicht in den Figuren 2 bis 4 erläutert.

So besteht der in der Fig. 1 schematisch dargestellte Ladebalken 14 aus einem mit einer in Fig. 3 gezeigten Kontur versehenen Rechteckprofil 24, etwa als Aluminium-Strangpreßteil realisiert, in dessen Inneren ein Innenteil 26 teleskopartig geführt ist. Genauer gesagt ist das Innenteil 26 mittels zwei voneinander abgewandter U-Profile 28 aufgebaut, die fest miteinander verbunden und im Inneren des Rechteckprofils 24 gleitend angeordnet sind.

Ein maximaler Längshub der teleskopartigen Längenverschiebung zwischen Innenteil 26 und Rechteckprofil 24 wird durch einen Querbolzen 30 erreicht, der sich endseitig quer durch den Innenraum des Profilelements 24 erstreckt und mit diesem beidseits fest verbunden ist. Der Querbolzen 30 wirkt zusammen mit einer entsprechend mittig im Innenteil gebildeten Längsnut 32 als Anschlag, die im dargestellten Ausführungsbeispiel einen Längshub von etwa 150 mm ermöglicht (bei Profilabmessungen von 88 x 66 mm und einer abhängig von einer jeweiligen Laderaumbreite vorgesehenen Gesamtlänge des Profilstücks 24).

Durch ein als Schwenkhebel 34 ausgebildetes Verriegelungselement, das um eine sich quer durch das Innenteil 26 erstreckende Schwenkachse 36 drehbar befestigt ist, läßt sich die Relativposition zwischen (äußerem) Rechteckprofil 24 und Innenteil 26 fixieren, nämlich dadurch, daß im Schwenkhebel endseitig -- der Schwenkachse 36 entgegengesetzt -vorgesehene Rastnuten 38 an einer vorbestimmten Relativposition der beiden Balkenelemente über den Querbolzen 30 greifen und damit diesen (und mithin das Rechteckprofil 24) fixieren.

Wie insbesondere in der teilweise aufgeschnittenen Seitenansicht der Fig. 2 oder der Querschnittsansicht der Fig. 3 zu erkennen, ist der Schwenkbereich des Hebels 34 in Aufwärtsrichtung durch einen Schenkel eines der U-Profile 28 begrenzt, ebenso wie in der Abwärtsrichtung durch den gegenüberliegenden Schenkel dieses Profils 28. Dadurch ist der Schwenkhebel nicht nur geschützt und platzsparend im Inneren der Teleskopbalkenanordnung aufgehoben; auch ist etwa durch die gezeigte Ausbildung des Verriegelungselements als ein- (oder doppel-) seitig bezogen auf das Innenteil 26 vorgesehenes, plattenförmiges Element mit einem zu einer ersten Rastnut 38 ansteigenden Rampenabschnitt 40 sichergestellt, daß durch einfaches Auseinanderziehen eines etwa mit seinem Eingriffsende 42 eingesteckten Ladebalken 14 dieser in seiner gewünschten Position fixiert ist und insbesondere durch Bewegungen der Trägeranordnung im Laderaum während einer Fahrt nicht zusammengedrückt oder auseinandergezogen werden kann. Damit ist im Ergebnis die Stabilität der gesamten Ladeanordnung deutlich verbessert, so daß insbesondere auch die vorteilhafte Doppel- oder Mehrstockverladung für Planenfahrzeuge möglich wird.

Auf die gezeigte Weise ist somit konstruktiv erreicht, daß eine Bedienperson zur Montage die Teleskopanordnung auseinanderzieht und dadurch der Schwenkhebel in einer ersten Rastnut einrastet end somit die Länge fixiert. Sollten etwa die geometrischen Gegebenheiten dazu führen, daß die so bestimmte Gesamtlänge des Ladebalkens noch nicht ausreichend ist, kann durch manuelle Betätigung (Lösen) des Schwenkhebels dieser aus seiner Rastposition verschwenkt werden, woraufhin dann auch ein weiteres Ausziehen des innenliegenden Teleskopelements möglich ist. Da, wie etwa in der Fig 2 gezeigt, in eingerastetem Zustand des Schwenkhebels dieser weitgehend außerhalb des umgebenen Rechteckprofils liegt, ist problemlos ein manueller Zugriff von der Seite her mäglich.

Die Fig. 4 zeigt eine alternative Ausführungsform des Schwenkhebels 34; der in der Fig. 4 gezeigte Schwenkhebel 34' weist einem anderen Anwendungszweck entsprechend geformte Ausnehmungen 38' im Schwenkelement 34' als Rastnuten auf, die einen jeweiligen Teleskophub des ausgezogenen Innenteils 26 festlegen.

Die vorliegende Erfindung ist ferner nicht auf die gezeigte Ladebalkenform beschränkt; so bietet es sich insbesondere an, das Profilteil des Ladebalkens -- je nach Einsatzzweck -- auch als sog. Tandem-Ladebalken zu realisieren. Ein entsprechendes Ladebalkenprofil ist im deutschen Gebrauchsmuster DE-U-94 14 683 der Anmelderin offenbart.

Während bevorzugt der erfindungsgemäß vorgesehene Teleskop-Ladebalken aus Aluminium (Profil) bzw. Stahl (Innenteil) realisiert ist, liegt es im Belieben des Fachmannes, geeignete andere Materialien und Materialkombinationen einzusetzen. Auch ist insbesondere eine endseitige Befestigung oder Aufhängung des Ladebalkens ausschließlich abhängig von einem verwendeten Balkensystem und unabhängig von der erfindungsgemäßen Verriegelungsvorrichtung für die Längenveränderung des Ladebalkens.

## Patentansprüche

1. Teleskop-Ladebalken mit einem langgestreckten Profilelement (24) und einem endseitig in diesem und axial relativ zu diesem verschiebbaren Teleskopelement (26), wobei zum lösbaren Fixieren einer Relativposition zwischen Profilelement (24) und Teleskopelement (26) eine Verriegelungsanordnung (30, 34) vorgesehen ist, die einen am Profilelement schwenkbar angeordneten Schwenkhebel (34) sowie ein zum Zusammenwirken mit einer Rastnut (38) in dem Schwenkhebel gebildetes, am Teleskopelement befestigtes Eingriffsstück (30) aufweist und wobei der Schwenkhebel (34) so ausgebildet ist, daß er durch ein Auseinanderziehen von Profilelement (24) und Teleskopelement (26) selbsttätig in eine erste Verriegelungsstellung gebracht wird,
**dadurch gekennzeichnet,**
**dass** das Eingriffsstück (30) einen maximalen Längshub einer Verschiebung zwischen Profilelement (24) und Teleskopelement (26) begrenzt.

2. Teleskop-Ladebalken mit einem langgestreckten Profilelement (24) und einem endseitig in diesem und axial relativ zu diesem verschiebbaren Teleskopelement (26), wobei zum lösbaren Fixieren einer Relativposition zwischen Profilelement (24) und Teleskopelement (26) eine Verriegelungsanordnung (30, 34) vorgesehen ist, die einen am Teleskopelement schwenkbar angeordneten Schwenkhebel (34) sowie ein zum Zusammenwirken mit einer Rastnut (38) in dem Schwenkhebel gebildetes, am Profilelement befestigtes Eingriffsstück (30) aufweist und wobei der Schwenkhebel (34) so ausgebildet ist, dass er durch ein Auseinanderziehen von Profilelement (24) und Teleskopelement (26) selbsttätig in eine erste Verriegelungsstellung gebracht wird, **dadurch gekennzeichnet, dass** das Eingriffsstück (30) einen maximalen Längshub einer Verschiebung zwischen Profilelement (24) und Teleskopelement (25) begrenzt.

3. Ladebalken nach Anspruch 1 oder 2, **dadurch gekennzeichnet, dass** das Profilelement als bevorzugt durch Strangpressen hergestelltes Kastenprofil realisiert und das Teleskopelement im Inneren des Kastenprofils verschiebbar vorgesehen ist.

4. Ladebalken nach Anspruch 1, **dadurch gekennzeichnet, dass** das Teleskopelement aus mindestens einem querschnittlich U-förmigen Profilelement realisiert ist.

5. Ladebalken nach Anspruch 4, **dadurch gekennzeichnet, daß** das Teleskopelement aus einem Paar von bodenseitig einander zugewandten, miteinander verbundenen U-Profilen realisiert ist und Querschnittsabmessungen aufweist, die an eine lichte Innenweite des Kastenprofils angepaßt sind.

6. Ladebalken nach Anspruch 3, **dadurch gekennzeichnet, daß** das Eingriffsstück als fest mit einander gegenüberliegenden Seitenwänden des Kastenprofils verbundenes Bolzenelement realisiert ist.

7. Ladebalken nach Anspruch 6, **dadurch gekennzeichnet, daß** das Bolzenelement ein im Teleskopelement gebildetes, sich axial erstreckendes Langloch durchgreift.

8. Ladebalken nach Anspruch 4, **dadurch gekennzeichnet, daß** der Schwenkhebel schwenkbar am Mittelstück des U-förmigen Profilelements festgelegt ist.

9. Ladebalken nach einem der Ansprüche 1 bis 8, **dadurch gekennzeichnet, daß** der Schwenkhebel eine Mehrzahl von einander benachbarten Rastnuten aufweist.

10. Ladebalken nach einem der Ansprüche 3 bis 9, **dadurch gekennzeichnet, daß** das Kastenprofil als Tandembalken mit querschnittlich beidseits von Profilwänden abragenden Kragstreifen ausgebildet ist.

11. Ladebalken nach Anspruch 10, **dadurch gekennzeichnet, daß** die Kragstreifen Teile eines an die Profilwände angeformten Obergurtes des Kastenprofils und die freien Enden der Kragstreifen jeweils als Hakenleiste geformt sind.

## Claims

1. Telescopic load beam comprising an elongated profile element (24) and a telescopic element (26) displaceable at its end therein and axially relative thereto, a locking arrangement (30, 34) being provided for releasably fixing the relative positions of the profile element (24) and the telescopic element (26) and having a swivelling lever (34) swivel-mounted on the profile element and an engagement piece (30) fixed to the telescopic element and formed to cooperate with a locking groove (38) in the swivelling lever, and the swivelling lever (34) being designed in such a manner that it is brought automatically into a first locking position when the profile element (24) and the telescopic element (26) are pulled apart, **characterised in that** the engagement piece (30) limits maximum longitudinal displacement between the profile element (24) and the telescopic element (26).

2. Telescopic load beam comprising an elongated profile element (24) and a telescopic element (26) displaceable at its end therein and axially relative thereto, a locking arrangement (30, 34) being provided for releasably fixing the relative positions of the profile element (24) and the telescopic element (26) and having a swivelling lever (34) swivel-mounted on the telescopic element and an engagement piece (30) fixed to the profile element and formed to cooperate with a locking groove (38) in the swivelling lever, and the swivelling lever (34) being designed in such a manner that it is brought automatically into a first locking position when the profile element (24) and the telescopic element (26) are pulled apart, **characterised in that** the engagement piece (30) limits maximum longitudinal displacement between the profile element (24) and the telescopic element (26).

3. Load beam according to claim 1 or claim 2, **characterised in that** the profile element is in the form of a box section preferably produced by extrusion and the telescopic element is displaceably provided in the interior of the box section.

4. Load beam according to claim 1, **characterised in that** the telescopic element is made from at least one profile element with a U-shaped cross section.

5. Load beam according to claim 4, **characterised in that** the telescopic element is made from a pair of U-shaped sections connected together and directed towards one another via their bases and has cross-sectional dimensions adapted to the internal width of the box section.

6. Load beam according to claim 3, **characterised in that** the engagement piece is in the form of a pin element rigidly connected to opposing side walls of the box section.

7. Load beam according to claim 6, **characterised in that** the pin element traverses an axially extending elongated hole formed in the telescopic element.

8. Load beam according to claim 4, **characterised in that** the swivelling lever is swivel-mounted on the central piece of the U-shaped profile element.

9. Load beam according to one of claims 1 to 8, **characterised in that** the swivelling lever has a plurality of adjacent locking grooves.

10. Load beam according to one of claims 3 to 9, **characterised in that** the box section is in the form of a tandem beam with cantilever strips projecting in cross section from either side of section walls.

11. Load beam according to claim 10, **characterised in that** the cantilever strips form parts of a top flange of the box section moulded on to the section walls and the free ends of the cantilever strips are each formed as hooked strips.

## Revendications

1. Poutre télescopique de charge avec un élément profilé (24) étiré en longueur et un élément télescopique (26) du côté de l'extrémité et coulissant axialement par rapport à cet élément profilé, dans laquelle pour la fixation amovible d'une position relative entre l'élément profilé (24) et l'élément télescopique (26), est prévu un agencement de verrouillage (30, 34) qui comporte un levier pivotant (34) disposé pivotant sur l'élément profilé, ainsi qu'une pièce d'accrochage (30) fixée sur l'élément télescopique et réalisée pour coopérer avec une rainure de verrouillage (38) dans le levier pivotant, et dans laquelle le levier pivotant (34) est réalisé de sorte qu'il soit amené automatiquement dans une première position de verrouillage par une traction relative mutuelle de l'élément profilé (24) et de l'élément télescopique (26),
**caractérisé en ce que**
la pièce d'accrochage (30) délimite une course longitudinale maximale d'un coulissement entre l'élément profilé (24) et l'élément télescopique (26).

2. Poutre télescopique de charge comprenant un élément profilé (24) étiré en longueur et un élément télescopique (26) du côté de l'extrémité et coulissant axialement par rapport à cet élément profilé, dans laquelle pour la fixation amovible d'une position relative entre l'élément profilé (24) et l'élément télescopique (26), est prévu un agencement de verrouillage (30, 34) qui comporte un levier pivotant (34) disposé pivotant sur l'élément télescopique, ainsi qu'une pièce d'accrochage (30) fixée sur l'élément profilé et réalisée pour coopérer avec une rainure de verrouillage (38) dans le levier pivotant, et dans laquelle le levier pivotant (34) est réalisé de sorte qu'il soit amené automatiquement dans une première position de verrouillage par traction relative mutuelle de l'élément profilé (24) et de l'élément télescopique (26), **caractérisée en ce que** la pièce d'accrochage (30) délimite une course longitudinale maximale d'un coulissement entre l'élément profilé (24) et l'élément télescopique (26).

3. Poutre de charge selon la revendication 1 ou 2, **caractérisée en ce que** l'élément profilé est réalisé de préférence par un profilé en caisson fabriqué par extrusion, et **en ce que** l'élément télescopique est prévu coulissant à l'intérieur du profilé en caisson.

4. Poutre de charge selon la revendication 1, **caractérisée en ce que** l'élément télescopique est réalisé à partir d'au moins un élément profilé en forme de U en section transversale.

5. Poutre profilée selon la revendication 4, **caractérisée en ce que** l'élément télescopique est réalisé à partir de deux profilés en U reliés l'un à l'autre et tournés à l'opposé l'un de l'autre du côté du fond, et présente des dimensions de section transversale qui sont adaptées à des dimensions intérieures libres du profilé en caisson.

6. Poutre de charge selon la revendication 3, **caractérisée en ce que** la pièce d'accrochage est réalisée sous la forme d'un élément de boulon relié rigidement aux parois latérales opposées l'une à l'autre du profilé en caisson.

7. Poutre de charge selon la revendication 6, **caractérisée en ce que** l'élément de boulon traverse un trou oblong s'étendant axialement et formé dans l'élément télescopique.

8. Poutre de charge selon la revendication 4, **caractérisée en ce que** le levier pivotant est fixé pivotant à la pièce médiane de l'élément profilé en formé de U.

9. Poutre de charge selon l'une des revendications 1 à 8, **caractérisée en ce que** le levier pivotant comporte une pluralité de rainures de verrouillage voisines les unes des autres.

10. Poutre de charge selon l'une des revendications 3 à 9, **caractérisée en ce que** le profilé en caisson est réalisé sous la forme de poutres en tandem présentant en section transversale des bandes en saillie faisant saillie des deux côtés des parois profilées.

11. Poutre de charge selon la revendication 10, **caractérisée en ce que** les bandes en saillie forment des parties d'une ceinture supérieure du profilé en caisson formée sur les parois profilées et **en ce que** les extrémités libres des bandes en saillie sont formées chacune comme une bande en crochet.
